(19) Europäisches Patentamt
European Patent Office
Office européen des brevets

(11) EP 1 141 109 B1

(12) **FASCICULE DE BREVET EUROPEEN**

(45) Date de publication et mention de la délivrance du brevet:
**18.02.2009 Bulletin 2009/08**

(21) Numéro de dépôt: **99961118.9**

(22) Date de dépôt: **21.12.1999**

(51) Int Cl.:
***C08K 3/36*** *(2006.01)* ***C08K 9/06*** *(2006.01)*
***C09D 183/04*** *(2006.01)*

(86) Numéro de dépôt international:
**PCT/FR1999/003213**

(87) Numéro de publication internationale:
**WO 2000/039208 (06.07.2000 Gazette 2000/27)**

# (54) COMPOSITION SILICONE POUR L'ENDUCTION DE SUBSTRATS EN MATIERE TEXTILE

SILICONZUSAMMENSTZUNG ZUR BESCHICHTUNG VON TEXTILSUBSTRATEN

SILICONE COMPOSITION FOR COATING TEXTILE MATERIAL SUBSTRATES

(84) Etats contractants désignés:
**AT BE CH CY DE DK ES FI FR GB GR IE IT LI LU MC NL PT SE**

(30) Priorité: **23.12.1998 FR 9816510**

(43) Date de publication de la demande:
**10.10.2001 Bulletin 2001/41**

(73) Titulaire: **Bluestar Silicones France**
**69486 Lyon (FR)**

(72) Inventeurs:
- **BOHIN, Fabrice**
  **F-92300 Levallois Perret (FR)**
- **POUCHELON, Alain**
  **F-69330 Meyzieu (FR)**
- **PREBET, Christiane**
  **F-69440 Taluyers (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
**EP-A- 0 240 163** **EP-A- 0 681 014**
**GB-A- 2 287 248**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 141 109 B1

## Description

Le domaine général de l'invention est celui des compositions silicones vulcanisables à froid (mais dont la vulcanisation est en général accélérée e.g. par la chaleur), en particulier celles du type bicomposant (EVF II), réticulant par hydrosilylation ou polyaddition pour produire un élastomère en couche mince. Ces compositions réticulées sont adaptées, entre autres comme revêtement, par exemple de protection ou de renfort mécanique de différents substrats, notamment en matière textile comme par exemple des supports fibreux, tissés, tricotés ou non tissés. De tels revêtements en silicone sont généralement obtenus par enduction du substrat puis durcissement découlant de la polyaddition des groupements insaturés (alcényles, e.g. Si-Vi) d'un polyorganosiloxane sur des groupements hydrogéno d'un autre polyorganosiloxane.

Ces compositions silicones ont trouvé un débouché important dans le revêtement des matériaux souples - tissés, tricotés ou non tissés - utilisés pour la fabrication de sacs de protection individuelle d'occupants de véhicules, dénommés également "airbag".

Pour plus de détails sur ces sacs de protection individuels ou "airbag", on peut se référer notamment au brevet français FR-A-2 668 106.

La présente invention concerne en particulier, mais pas exclusivement, l'application des compositions selon l'invention dans la fabrication de tels sacs de protection.

Traditionnellement, ces derniers étaient formés par une toile en fibre synthétique, par exemple en polyamide (Nylon)®, recouverte sur au moins l'une de ses faces d'une couche d'un élastomère du type chloroprène. La présence d'une telle couche ou d'un tel revêtement de protection est dictée par le fait que les gaz libérés par le générateur de gaz (par exemple : monoxyde de carbone, NOx) en cas de choc, sont extrêmement chauds et contiennent des particules incandescentes susceptibles d'endommager le sac en Nylon®. La couche de protection interne en élastomère doit donc être particulièrement résistante aux hautes températures et aux contraintes mécaniques. Il importe également que ce revêtement élastomère se présente sous la forme d'un film fin, uniforme et parfaitement adhérent au support en tissu synthétique, formant les parois de "l'airbag".

Afin d'éviter le passage des gaz libérés par le générateur de gaz dans l'habitacle, il est important d'assurer une bonne et constante imperméabilité du sac de protection. Le revêtement élastomère doit permettre encore d'atteindre cet objectif et cela, même avec de faibles quantités déposées.

Une autre contrainte qui s'impose au revêtement élastomère est celle de la tenue au vieillissement, i.e. de la préservation dans le temps des propriétés thermiques, mécaniques et d'adhésion. Cette contrainte est d'autant plus aiguë que les sacs de protection individuelle sont stockés sous forme pliée dans les véhicules automobiles, avant leur éventuelle expansion salvatrice en cas d'accident.

Comme autre critère, et qui n'est pas négligeable, on fera noter que le revêtement de protection ne doit pas poser de problèmes au regard de la fabrication par couture de "l'airbag".

Les compositions silicones ont aisément supplanté les chloroprènes dans cette application, car il s'est avéré que ces derniers ne répondent pas de façon satisfaisante à toutes les spécifications susvisées. On a assisté à une diversification des compositions silicones d'enduction et des sacs les comportant, pour favoriser certaines propriétés.

Selon EP-A-0 553 840, des compositions silicones connues comprennent :

- un polydiorganosiloxane ayant au moins deux groupements alcényles par molécule,
- un polyorganohydrogénosiloxane ayant au moins deux atomes d'hydrogène liés au silicium dans chaque molécule,
- un catalyseur métallique du groupe du platine,
- un promoteur d'adhérence consistant dans un composé organosilicié époxy-fonctionnel,
- une charge inorganique, e.g. charges de renfort telles que oxyde de titane fumé, silice microparticulaire, e.g. silice fumée, silice de précipitation, silice de combustion ; charges non renforçantes telles que poudre de quartz, terres de diatomées, oxydes de fer, oxydes d'aluminium, carbonate de calcium ou de magnésium : e.g. on incorpore une silice traitée par un organosilane, un organosilazane ou un diorganocyclopolysiloxane.
- une résine polyorganosiloxane,
- et éventuellement un composé utile comme inhibiteur de réticulation.

Dans US-A-5 296 298. on rencontre à nouveau les six premiers constituants précités, mais on note que le promoteur d'adhérence consiste ici dans l'association d'un composé organosilicié époxy-fonctionnel avec un silane alcoxylé contenant, par molécule, un groupe (méth)acryle ou (méth)acryloxy et éventuellement avec un chélate d'aluminium, tandis que, la charge inorganique est présentée comme optionnelle, bien qu'elle (quartz ou silice) soit mise en oeuvre dans tous les exemples 1 à 20 illustrant l'invention. Comme exemples de charges, ce document cite la silice fumée, la silice de précipitation, le quartz pulvérulent, les terres de diatomées, les billes de verre.

Les compositions silicones connues précitées souffrent cependant de l'inconvénient de ne pas adhérer suffisamment au tissu en polyamide du sac, pour garantir une fiabilité optimale.

Dans EP-A- 681 014 on a cherché à obtenir une composition silicone, applicable notamment comme revêtement interne "d'airbag" et présentant à cette fin des propriétés plus favorables en matière notamment de résistance au feu et à la température, de propriétés mécaniques, de tenue au vieillissement, d'adhérence et d'uniformité de surface, l'adhérence sur des substrats en matière textile étant plus particulièrement recherchée. La solution proposée consistait à mettre en oeuvre :

- une composition silicone d'enduction du type de celles vulcanisables à froid (EVF) consistant dans le mélange formé de :

  (I) au moins un polyorganosiloxane présentant, par molécule, au moins deux groupes alcényles, en $C_2$-$C_6$ liés au silicium,
  (II) au moins un polyorganosiloxane présentant, par molécule, au moins deux atomes d'hydrogène liés au silicium,
  (III) une quantité catalytiquement efficace d'au moins un catalyseur, composé d'au moins un métal appartenant au groupe du platine,
  (IV) un promoteur d'adhérence,
  (V) éventuellement une charge de préférence minérale.
  (VI) éventuellement au moins un inhibiteur de réticulation.
  (VII) et éventuellement au moins une résine polyorganosiloxane,

- dans laquelle le promoteur d'adhérence est constitué exclusivement par l'association au moins ternaire des ingrédients suivants :

  (IV.1) au moins un organosilane alcoxylé contenant, par molécule, au moins un groupe alcényle en $C_2$ - $C_6$.
  (IV.2) au moins un composé organosilicié comprenant au moins un radical époxy,
  (IV.3) au moins un chélate de méta! M et/ou un alcoxyde métallique de formule générale : M(OJ)n, avec n = valence de M et J = alkyle linéaire ou ramifié en $C_1$ - $C_8$.
  M étant choisi dans le groupe formé par : Ti, Zr, Ge, Li, Mn, Fe, Al et Mg.

Dans EP-A-681 014, la charge minérale peut jouer le rôle de charge renforçante ou semi-renforçante. Ces charges renforçantes peuvent être choisies parmi les silices colloïdales, les poudres de silice de combustion et de précipitation. Ces poudres ont une taille moyenne de particule généralement inférieure à 0,1 μm et une surface spécifique BET supérieure à 50 $m^2$/g, de préférence comprise entre 150 et 350 $m^2$/g. Les charges semi-renforçantes peuvent être des terres de diatomées ou du quartz broyé, ou encore des matières minérales non siliceuses de granulométrie généralement comprise entre 0,001 et 300 μm et une surface spécifique BET inférieure à 100 $m^2$/g. De préférence, la charge est un mélange de quartz et de silice.

Ces différents auteurs se sont préoccupés d'améliorer surtout l'adhérence des élastomères silicones sur les supports et la finesse de la couche élastomérique.

La déposante s'est donnée quant à elle comme objectif d'accroître de manière notable les propriétés mécaniques de ces élastomères, et tout particulièrement l'allongement à la rupture ou extensibilité, sans pour autant remettre en cause les autres propriétés.

La présente invention a notamment pour objectif de fournir des compositions d'enduction conduisant à des élastomères dont l'extensibilité est supérieure ou égale à 400 % mesurée par la norme AFNOR T46002 et plus particulièrement supérieure ou égale à 500 %.

La présente invention concerne un procédé de préparation d'une composition d'enduction du type de celles vulcanisables à froid (EVF) et la composition elle-même, comprenant :

(1) au moins un polyorganosiloxane présentant, par molécule, au moins deux groupes alcényles, en C2-C6 liés au silicium,
(2) au moins un polyorganosiloxane présentant, par molécule, au moins deux atomes d'hydrogène liés au silicium.
(3) une quantité catalytiquement efficace d'au moins un catalyseur, à base d'au moins un métal appartenant au groupe du platine.
(4) un promoteur d'adhérence ternaire comportant

  (4.1) au moins un organosilane, éventuellement alcoxylé contenant, par molécule, au moins un groupe alcényle en $C_3$-$C_6$,
  (4.2) au moins un composé organosilicié comprenant au moins un radical époxy.
  (4.3) au moins un chélate de métal M et/ou un alcoxyde métallique de formule générale : M(OJ)n, avec n =

valence de M et J = alkyle linéaire ou ramifié en $C_1$ - $C_8$,
M étant choisi dans le groupe formé par : Ti. Zr, Ge, Li, Mn, Fe, Al et Mg,

(5) une charge siliceuse renforçante traitée in situ par un agent de compatibilisation en présence de polyorganosiloxane (1),
(6) un polyorganosiloxane qualifié d'allongeur et présentant des motifs siloxyles terminaux à fonctions hydrogéno,
(7) éventuellement un neutralisant,
(8) éventuellement un inhibiteur de réticulation et/ou autre(s) additif(s) en usage dans ce type de compositions,
(9) et éventuellement des charges microsphériques creuses inorganiques expansées ou expansables.

La conjonction d'une charge siliceuse traitée in situ, en deux temps d'un polyorganosiloxane allongeur et d'un promoteur d'adhérence ternaire incluant un organosiloxane ayant au moins un groupe alcényle en $C_3$-$C_6$, conduit à des compositions silicones d'enduction répondant aux objectifs de l'invention et permettant tout particulièrement de conduire à un élastomère d'extensibilité supérieure ou égale à 400 %, de préférence à 500 %.
La charge est de préférence une charge renforçante. L'utilisation d'une charge non renforçante n'est pas exclue en complément.
La charge renforçante est de préférence une charge siliceuse.
Les charges siliceuses renforçantes sont choisies parmi les silices colloïdales, les poudres de silice de combustion et de précipitation ou leur mélanges.
Ces poudres présentent une taille moyenne de particule généralement voisine ou inférieure à 0,1 μm et une surface spécifique BET supérieure à 50 $m^2$/g, de préférence comprise 50 et 400 $m^2$/g, notamment entre 150 et 350 $m^2$/g.
Parmi les charges non renforçantes de complément on peut citer notamment les terres de diatomées et le quartz broyé.
D'autres charges complémentaires sont par exemple le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 μm et une surface BET inférieure à 100 $m^2$/g.
Par traitement in situ de la charge siliceuse, on entend la mise en présence de la charge et de l'agent de compatibilisation en présence d'au moins une portion d'huile silicone polyorganosiloxane (1). Cela consiste essentiellement à introduire de l'agent de compatibilisation (AC) en deux temps dans le milieu de préparation :

- d'une part, avant et/ou sensiblement simultanément à la mise en présence d'au moins une partie dé l'huile silicone mise en oeuvre avec au moins une portion de la charge siliceuse utilisée, cette introduction d'AC (portion 1) s'opérant en une ou plusieurs fois et correspondant à une proportion inférieure ou égale à 8 %, de préférence à 5 % et, plus préférentiellement encore, à 3 % en poids sec par rapport à la charge totale ;
- et d'autre part (portion 2), après cette mise en présence d'huile silicone/charge.

L'agent de compatibilisation de la portion 1 est ainsi choisi parmi des molécules qui satisfont à au moins deux critères :

- présenter une interaction forte avec la silice au niveau de ses liaisons hydrogène avec elle-même, et avec l'huile silicone environnante
- être elle-même, ou ses produits de dégradation, aisément évacués du mélange final par chauffage sous vide ou sous courant gazeux, et les composés de bas poids moléculaire sont donc préférés,

Par quantité globalement équivalente on entend le respect de l'ordre de grandeur des quantités molaires de l'AC vis-à-vis des liaisons hydrogène.
L'agent de la portion 1 pourra être par exemple :

- un silazane de préférence un disilazane, ou leurs mélanges, l'hexaméthyldisilazane (HMDZ) étant le silazane préféré et pouvant être associé au divinyltétraméthyldisilazane
- un siloxane hydroxylé di- ou de préférence mono-fonctionnel
- une amine telle que l'ammoniaque ou une alkylamine de bas poids moléculaire comme la diéthylamine
- un acide organique de bas poids moléculaire comme les acides formique ou acétique,
- et est de préférence mis en oeuvre en présence d'eau.

Les agents de compatibilisation de la portion 2 peuvent être choisis parmi les différents silazanes et disilazanes rencontrés ci-dessus, pris seuls ou en mélanges entre eux, de préférence parmi les disilazanes, l'hexaméthyldisilazane

associé ou non au divinyltétraméthyldisilazane étant particulièrement préféré.

Plus précisément, la méthode peut consister :

- à mélanger :
  - 100 parties en poids d'huile silicone
  - 0 à 5 parties en poids d'eau
  - 20 à 80 parties en poids de charge constituée par de la silice
  - 1 à 20 parties en poids d'agent de compatibilisation,
- à laisser réagir, de préférence sous agitation,
- à chauffer le mélange obtenu, en choisissant un couple pression/température tel qu'il se produit une dévolatilisation d'au moins une partie de l'eau et des éléments volatifs ;
- à refroidir si nécessaire le mélange.

L'opération de mélange s'effectue à température et à pression normales et de préférence sous atmosphère inerte ($N_2$). Il convient d'ailleurs que dans ces conditions, l'huile silicone, l'eau mais également l'agent de compatibilisation se trouvent sous forme liquide pour faciliter le mélange.

La charge renforçante silicique représente de 10 à 50 % en poids de la suspension obtenue. En pratique, cette charge est de l'ordre de 30 $\pm$ 10 %.

Avantageusement, la proportion d'agent de compatibilisation introduite dans un premier temps est au plus égale à 8 % de la charge renforçante (et par exemple comprise entre 1 et 3 % de la charge renforçante, de préférence entre 1 et 2 %). Par ailleurs, on peut indiquer que la quantité totale d'agent AC est, de préférence, comprise entre 5 et 30 % de la charge silicique, de préférence entre 10 et 20 %.

Pour définir plus précisément, sans toutefois que cela ne soit limitatif, le mode préféré de mise en oeuvre du procédé de compatibilisation, on peut indiquer que celui-ci comprend les étapes suivantes :

- on mélange - de préférence sous atmosphère de gaz inerte (e.g. $N_2$) - tout ou partie de l'huile silicone, l'eau et tout ou partie de la charge siliceuse, avec une première portion d'AC comprise entre 1 et 3 % en poids sec par rapport à la silice,
- on incorpore au mélange une deuxième portion d'AC représentant entre 10 et 15 % en poids sec de la silice,
- éventuellement, on ajoute les restes d'huile silicone et de silice,
- on laisse réagir de préférence en poursuivant le mélange,
- on dévolatilise, de préférence sous atmosphère de gaz inerte (e.g. $N_2$),
- on laisse éventuellement refroidir le mélange dévolatilisé
- et on complète éventuellement la suspension avec les restes d'huile silicone.

**[0036]** - Suivant un premier mode particulier de mise en pratique du procédé, celui-ci comprend les étapes suivantes :

- 1 - on procède à l'homogénéisation d'un mélange comprenant l'huile silicone, l'eau et la première fraction d'AC - de préférence d'HMDZ,
- 2 - on ajoute progressivement la charge particulaire de préférence la silice, au mélange obtenu en 1,
- 3 - on poursuit le mélange,
- 4 - on incorpore progressivement au mélange obtenu en 3, la deuxième fraction d'AC - de préférence l'HMDZ -
- 5 - on poursuit le mélange,
- 6 - on dévolatilise, de préférence par chauffage à une température ≥ 100° C et de préférence sous pression réduite ou sous balayage d'azote.

Dans l'étape 1 de ce premier mode de mise en pratique, on a le choix entre les trois alternatives suivantes, parmi d'autres :

a) soit on met en oeuvre toute l'huile et toute la silice ainsi que la fraction de départ d'AC.
b) soit on met en oeuvre toute l'huile, une partie de la silice et la fraction de départ d'AC,
c) soit on met en oeuvre toute la silice, une partie de l'huile et la fraction de départ d'AC.

Selon un deuxième mode particulier de mise en pratique du procédé, ce dernier comprend les étapes suivantes

- 1' - on procède à l'homogénéisation de l'huile silicone et de l'eau

- 2' - on incorpore progressivement dans le mélange obtenu en 1', la charge particulaire - de préférence la silice - et simultanément la première fraction d'AC - de préférence l'HMDZ :
- 3 - on poursuit le mélange,
- 4 - on incorpore progressivement au mélange obtenu en 3, la deuxième fraction d'AC - de préférence d'HMDZ -
- 5 - on poursuit le mélange,
- 6 - on dévolatilise, de préférence par chauffage à une température ≥ 100° C.

La caractéristique de ce deuxième mode est liée au fait que l'on procède à une co-addition de la charge renforçante particulaire et de son agent de comptabilisation. On peut donc imaginer réaliser un pré-mélange de ces deux constituants ou alternativement une introduction concomitante de ceux-ci. L'incorporation progressive de l'étape 2' peut être effectuée de manière continue ou fractionnée.

Selon une variante de ce deuxième mode de mise en pratique,

- 1" - on charge l'huile silicone,
- 2"- on incorpore progressivement et simultanément dans l'huile, la charge particulaire - de préférence la silice - la première fraction d'AC
- de préférence l'HMDZ - et l'eau
- 3 - on poursuit le mélange,
- 4 - on incorpore progressivement au mélange obtenu en 3, la deuxième fraction d'AC - de préférence d'HMDZ -
- 5 - on poursuit le mélange.
- 6 - on dévolatilise de préférence par chauffage à une température ≥100° C.

Suivant une disposition avantageuse de l'invention correspondant au cas dans lequel la charge renforçante est de la silice et l'agent AC de l'HMDZ, on met en oeuvre une quantité d'HMDZ suffisante pour que le taux de surface de la silice en motif $Si(Me)_3$ soit ≥ à 1 motif $Si(Me)_3$ par $nm^2$ et de préférence compris entre 1 et 2 motifs $Si(Me)_3$ par $nm^2$.

En variante, on peut utiliser les méthodes de compatibilisation de l'art antérieur prévoyant un traitement précoce par le silazane (e.g. FR-A-2 320 324) ou un traitement tardif (e.g. EP-A-462 032) tout en sachant cependant que selon les silices utilisées leur emploi ne permettra en général pas d'obtenir les meilleurs résultats en termes de propriétés mécaniques, en particulier extensibilité, obtenus par un traitement en deux temps conforme à l'invention.

Dans le cas où le traitement in situ conduit à un pH basique, on peut ajouter un neutralisant tel que par exemple acides faibles (e.g. acide acétique et acide phosphorique tamponné). On notera que cette neutralisation pourra être avantageusement obtenue par l'incorporation de charges de silice telles que le quartz broyé.

Conformément à une disposition préférée de l'invention, l'organosilane alcoxylé (4.1) du promoteur (4) est plus particulièrement sélectionné parmi les produits de formule générale suivante :

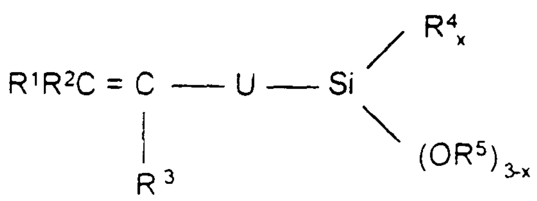

dans laquelle :

- $R^1$ $R^2$, $R^3$ sont des radicaux hydrogénés ou hydrocarbonés identiques ou différents entre eux et représentent, de préférence, l'hydrogène, un alkyle linéaire ou ramifié en $C_1$-$C_4$ ou un phényle éventuellement substitué par au moins un alkyle en $C_1$-$C_3$,
- U est un alkylène linéaire ou ramifié en $C_1$ - $C_4$, ou un groupement divalent de formule -CO-O-alkylène- où le reste alkylène est un alkyle linéaire ou ramifié en $C_1$-$C_4$ et la valence libre de droite (en gras) est reliée au Si
- $R^4$ et $R^5$ sont des radicaux identiques ou différents et représentent un alkyle en $C_1$ - $C_4$ linéaire ou ramifié,
- x = 0 à 2, de préférence 0 ou 1 et plus préférentiellement encore 0.

On peut citer en particulier le γ-méthacryloxypropyltrimétoxysilane (MEMO).

S'agissant du composé organosilicié (4.2), il est prévu conformément à l'invention, de le choisir

- soit parmi les produits (4.2a) répondant à la formule générale suivante:

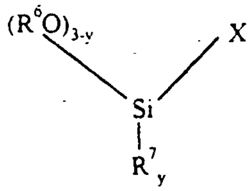

(4.2a)

dans laquelle :

- $R^6$ est un radical alkyle linéaire ou ramifié en $C_1$ - $C_4$,
- $R^7$ est un radical alkyle linéaire ou ramifié,
- y est égal à 0, 1, 2 ou 3, de préférence à 0 ou 1 et, plus préférentiellement encore à 0,
- 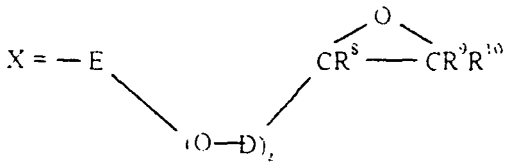

avec

△ E et D qui sont des radicaux identiques ou différents choisis parmi les alkyles en $C_1$-$C_4$ linéaires ou ramifiés,
△ z qui est égal à 0 ou 1.
△ $R^8$, $R^9$, $R^{10}$ qui sont des radicaux identiques ou différents représentant l'hydrogène ou un alkyle linéaire ou ramifié en $C_1$-$C_4$, l'hydrogène étant plus particulièrement préféré,
△ $R^8$ et $R^9$ ou $R^{10}$ pouvant alternativement constituer ensemble et avec les deux carbones porteurs de l'époxy, un cycle alkyle ayant de 5 à 7 chaînons.

- soit parmi les produits (4.2b) constitués par des polydiorganosiloxanes époxyfonctionnels comportant :

(i) au moins un motif siloxyle de formule :

$$X_p G_q \; SiO_{\frac{4-(p+q)}{2}} \quad (IV.2\ b_1)$$

dans laquelle :

- X est le radical tel que défini ci-dessus pour la formule (IV.2 a)
- G est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- p=1 ou 2,
- q = 0, 1 ou 2,
- p + q = 1, 2 ou 3,

et (2i) éventuellement au moins un motif siloxyle de formule :

$$G_r\,SiO_{\frac{4-r}{2}} \quad (IV.2\ b_2)$$

dans laquelle G a la même signification que ci-dessus et r a une valeur comprise entre 0 et 3, par exemple entre 1 et 3.

Les composés (4.2) sont préférentiellement des époxyalcoxymonosilanes (IV.2 a).

A titre d'exemple de tels composés (IV.2 a) on peut citer :

- le 3-glycidoxypropyltriméthoxysilane (GLYMO)
- ou le 3,4-époxycyclohexyléthyltriméthoxysilane.

En ce qui concerne le dernier composé essentiel (4.3) du promoteur d'adhérence (4) de la composition silicone (EVF) selon l'invention, les produits préférés sont ceux dans lesquels le métal M est choisi dans la liste suivante : Ti, Zr, Ge, Li, Mn. Il est à souligner que le titane est plus particulièrement préféré. On peut lui associer, par exemple, un radical alkoxy de type butoxy.

Selon l'invention, une combinaison avantageuse pour former le promoteur d'adhérence est la suivante :

γ-méthacryloxypropyltriméthoxysilane (MEMO) / 3-glycidoxypropyltriméthoxysilane (GLYMO)/titanate de butyle (TBOT = tetrabutyl orthotitanate).

Sur le plan quantitatif, il peut être précisé que les proportions pondérales entre (4.1), (4.2) et (4.3), exprimées en pourcentages en poids par rapport au total des trois, sont les suivantes :

(4.1) ≥ 10, de préférence compris entre 15 et 70 et plus préférentiellement encore entre 25 à 65,
(4.2) ≤ 90, de préférence compris entre 70 et 15 et plus préférentiellement encore entre 65 à 25,
(4.3) ≥ 1. de préférence compris entre 5 et 25 et plus préférentiellement encore entre 8 à 18.

étant entendu que la somme de ces proportions en (4.1), (4.2), (4.3) est égale à 100 %.

Le ratio pondéral (4.2) : (4.1) est de préférence compris entre 2 : 1 et 0,5 : 1, le ratio 1 : 1 étant plus particulièrement préféré.

Avantageusement, le promoteur d'adhérence est présent à raison de 0,1 à 10, de préférence 0,5 à 5 et plus préférentiellement encore 1 à 3 % en poids par rapport à l'ensemble des constituants de la composition.

Le polyorganosiloxane allongeur (6) présente des motifs siloxyles terminaux

$$HR^0_2SiO_{1/2}$$

avec
$R^0$ identiques ou différents entre eux et correspondant à un groupement alkyle linéaire ou ramifié en $C_1$-$C_6$ et/ou aryle substitué ou non, $R^0$ étant préférentiellement $CH_3$.

On notera que le reste de la molécule est un polydiorganosiloxane, de préférence un polydiméthylsiloxane.

A titre d'exemple on peut citer le poly(diméthylsiloxy)-α,ω-(diméthylhydrogénosiloxy). A titre d'exemple de produit commercial susceptible d'être utilisé comme allongeur, on peut citer le RHODORSIL® 620 H2 de la société RHODIA CHIMIE.

Le polyorganosiloxane (1) est pondéralement l'un des constituants essentiel de la composition selon l'invention. Avantageusement, Il s'agit d'un produit comportant

(i) des motifs siloxyles de formule :

$$T_a\,Z_b\,SiO_{\frac{4-(a+b)}{2}} \quad (1.1)$$

dans laquelle :

- T est un groupe alcényle, de préférence vinyle ou allyle,
- Z est un groupe hydrocarboné monovalent, exempt, d'action défavorable sur l'activité du catalyseur et choisi,

de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle, tolyle et phényle,
- a est 1 ou 2, b est 0, 1 ou 2 et a + b est compris entre 1 et 3, de préférence entre 2 et 3,

et (2i) éventuellement des autres motifs siloxyles de formule :

$$Z_c\,SiO_{\frac{4-c}{2}} \quad (1.2)$$

dans laquelle Z a la même signification que ci-dessus et c a une valeur comprise entre 0 et 3. de préférence entre 2 et 3.

Il est avantageux que ce polydiorganosiloxane ait une viscosité comprise entre 200 et 10 000 mPa.s, notamment entre 500 et 5000, et de préférence entre 1000 et 2000.

Bien entendu, en cas de mélange de plusieurs huiles (1) de viscosité différentes, on prend en compte la viscosité du mélange.

Toutes les viscosités dont il est question ici correspondent à une grandeur de viscosité dynamique qui est mesurée, de manière connue en soi, à 25°C.

Le polyorganosiloxane (1) peut être uniquement formé de motifs de formule (1.1) ou peut contenir, en outre, des motifs de formule (1.2). De même, il peut présenter une structure linéaire ramifiée cyclique ou en réseau.

Z est généralement choisi parmi les radicaux méthyle, éthyle et phényle, 60 % molaire (ou en nombre) au moins des radicaux Z étant des radicaux méthyle.

Des exemples de motifs siloxyles de formule (1.1) sont le motif vinyldiméthylsiloxyle, le motif vinylphénylméthylsiloxyle, le motif vinylméthylsiloxyle et le motif vinylsiloxyle.

Des exemples de motifs siloxyles de formule (1.2) sont les motifs $SiO_{4/2}$, diméthylsiloxyle, méthylphénylsiloxyle, diphénylsiloxyle, méthylsiloxyle et phénylsiloxyle.

Des exemples de polyorganosiloxanes (1) sont des composés linéaires et cycliques comme : les diméthylpolysiloxanes à extrémités diméthylvinylsilyles, les copolymères (méthylvinyl) (diméthyl) polysiloxanes à extrémités triméthylsilyles, les copolymères (méthylvinyl) (diméthyl) polysiloxanes à extrémités diméthylvinylsilyles ; les méthylvinylpolysiloxanes cycliques.

Le polyorganosiloxane (2) est de préférence du type de ceux comportant :

(i) des motifs siloxyles de formule :

$$H_d\,L_e\,SiO_{\frac{4-(d+e)}{2}} \quad (2.1)$$

dans laquelle :

- L est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle, tolyle et phényle,
- d est 1 ou 2, e est 0, 1 ou 2, d + e a une valeur comprise entre 1 et 3, de préférence entre 2 et 3,

et (2i) éventuellement des autres motifs siloxyles de formule moyenne :

$$L_g\,SiO_{\frac{4-g}{2}} \quad (2.2)$$

dans laquelle L a la même signification que ci-dessus et g a une valeur comprise entre 0 et 3, de préférence entre 2 et 3.

La viscosité dynamique de ce polyorganosiloxane (2) est au moins égale à 10 mPa.s et, de préférence elle est comprise entre 20 et 1000 mPa.s.
Le polyorganosiloxane (2) peut être uniquement formé de motifs de formule (2.1) ou comporter en plus des motifs de formule (2.2).
Le polyorganosiloxane (2) peut présenter une structure linéaire ramifiée cyclique ou en réseau.
Le groupe L a la même signification que le groupe Z ci-dessus.
Des exemples de motifs de formule (2.1) sont :

$H(CH_3)_2SiO_{1/2}$, $HCH_3SiO_{2/2}$, $H(C_6H_5)SiO_{2/2}$

Les exemples de motifs de formule (2.2) sont les mêmes que ceux donnés plus haut pour les motifs de formule (1.2).
Des exemples de polyorganosiloxane (2) sont des composés linéaires et cycliques comme :

- les diméthylpolysiloxanes à extrémités hydrogénodiméthylsilyle,
- les copolymères à motifs (diméthyl) (hydrogénométhy!) polysiloxanes à extrémités triméthylsilyles,
- les copolymères à motifs (diméthyl) (hydrogénométhyl) polysiloxanes à extrémités hydrogénodiméthylsilyles,
- les hydrogénométhylpolysiloxanes à extrémités triméthylsilyles,
- les hydrogénométhylpolysiloxanes cycliques.

Le rapport du nombre d'atomes d'hydrogène liés au silicium dans le polyorganosiloxane (2) sur le nombre total de groupes à insaturation alcényle du polyorganosiloxane (1) est compris entre 1 et 5. de préférence entre 1 et 2.
Les catalyseurs (3) sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est à base de platine. Dans ce cas, la quantité pondérale de catalyseur (3), calculée en poids de platine-métal, est généralement comprise entre 2 et 400 ppm, de préférence entre 5 et 50 ppm basés sur le poids total des polyorganosiloxanes (1) et (2).
Avantageusement, la composition silicone selon l'invention peut en outre comprendre au moins un ralentisseur de la réaction d'addition (inhibiteur de réticulation), choisi parmi les composés suivants :

polyorganosiloxanes substitués par au moins un alcényle pouvant se présenter éventuellement sous forme cyclique, le tétraméthylvinyltétrasiloxane étant particulièrement préféré,

- la pyridine
- les phosphines et les phosphites organiques,
- les amides insaturés
- les maléates alkylés
- et les alcools acétyléniques.

Ces alcools acétyléniques, (Cf. FR-B-1 528 464 et FR-A-2 372 874), qui font partie des bloqueurs thermiques de réaction d'hydrosilylation préférés, ont pour formule :

$$R' - (R'') C (OH) - C \equiv CH$$

formule dans laquelle.

- R' est un radical alkyle linéaire ou ramifié, ou un radical phényle ;
- R" est H ou un radical alkyle linéaire ou ramifié, ou un radical phényle ; les radicaux R', R" et l'atome de carbone situé en $\alpha$ de la triple liaison pouvant éventuellement former un cycle ;

le nombre total d'atomes de carbone contenu dans R' et R" étant d'au moins 5, de préférence de 9 à 20.
Lesdits alcools sont, de préférence, choisis parmi ceux présentant un point d'ébullition supérieur à 250° C. On peut citer à titre d'exemples :

- l'éthynyl-1-cyclohexanol-1 ;
- le méthyl-3 dodécyne-1 ol-3 ;

- le triméthyl-3,7,11 dodécyne-1 ol-3 ;
- le diphényl-1,1 propyne-2 ol-1 :
- l'éthyl-3 éthyl-6 nonyne-1 ol-3 :
- le méthyl-2 butyne-3 ol-2 :
- le méthyl-3 pentadécyne-1 ol-3.

Ces alcools $\alpha$-acétyléniques sont des produits du commerce.

Un tel ralentisseur est présent à raison de 3 000 ppm au maximum, de préférence à raison de 100 à 2000 ppm par rapport au poids total des organopolysiloxanes (1) et (2).

Les charges microsphériques sont de préférence des microsphères organiques expansables comportant, comme cela est connu en soi, une paroi polymère renfermant un liquide ou un gaz. On provoque l'expansion de ces microsphères en les chauffant au delà du point de ramollissement du polymère et à une température suffisante pour vaporiser le liquide ou dilater convenablement le gaz, lequel peut être par exemple un alcane tel que isobutane ou isopentane. La paroi peut consister, comme cela est connu en soi, en polymères ou copolymères, par exemple préparés à partir de monomères chlorure de vinyle, chlorure de vinylidène, acrylonitrile, méthacrylate de méthyl ou styrène ou mélanges de polymères et/ou copolymères, par exemple notamment de copolymère acrylonitrile/methacrylonitrile, copolymère acrylonitrile/chlorure de vinylidène. Voir notamment US-A-3 615 972.

On peut les incorporer dans la composition indifféremment à l'état expansé ou avant leur expansion, que l'on pourra induire, par chauffage approprié, lors de la réticulation de la composition.

Il peut être avantageux que les microsphères soient traitées en surface comme cela est connu en soi, pour en favoriser la dispersion dans la composition : il peut s'agir notamment de microsphères expansables ou expansées présentant un revêtement inorganique, par exemple silice ou sels ou hydroxydes de métaux tels que Ca, Mg, Ba, Fe, Zn, Ni, Mn, comme cela est décrit par exemple dans EP-A-486 080, ou encore carbonates, par exemple carbonate de calcium.

A titre d'exemple préféré, on utilise les microsphères vendues sous la dénomination Dualite® par UCB-chemicals.

Avant leur expansion, les microsphères auront de préférence un diamètre compris entre 3 et 50 $\mu$m, plus particulièrement entre 5 et 30 $\mu$m.

On recherchera également un diamètre après expansion (in situ ou d'origine) compris notamment entre 10 et 150, en particulier entre 20 et 100 $\mu$m.

Ces microsphères seront présentes notamment à raison de 1 à 30 % en poids, de préférence de 2 à 10 % et plus préférentiellement de plus de 3 ou 4 %, en poids par rapport à la composition totale.

De manière connue en soi, la composition élastomère silicone peut être additionnée d'un ou plusieurs autres additif(s) classique(s) comme par exemple les colorants.

Selon un autre de ces aspects, la présente invention est relative à un système précurseur bicomposant de la composition silicone décrite supra. Un tel système précurseur se présente en deux parties A et B distinctes, destinées à être mélangées pour former la composition, l'une de ces parties A ou B comprenant le catalyseur (3) et une seule espèce (1) ou (2) de polyorganosiloxane. Une autre caractéristique de ce système précurseur est que sa partie A ou B contenant le polyorganosiloxane (2) est exempte de composés (4.3) du promoteur (4) et que sa partie A ou B incluant le composé (4.1) du promoteur (4) ne comprend pas le catalyseur (3) ; la charge traitée in situ est présente dans la ou les parties A et B qui contiennent le polyorganosiloxane (1).

La détermination et l'optimisation des deux parties A et B pour éviter de mettre en présence dans l'une des parties des espèces susceptibles de réagir ensemble, font partie des capacités normales de l'homme du métier.

La viscosité des parties A et B et de leur mélange peut être ajustée en jouant sur les quantités des constituants et en choisissant les polyorganosiloxanes de viscosité différente.

Une fois mélangées l'une à l'autre les parties A et B forment une composition silicone (EVF II) prête à l'emploi, qui peut être appliquée sur le support par tout moyen d'enduction approprié (par exemple racle, cylindre, sérigraphie, etc.). Bien que la réticulation de la composition appliquée sur le support à revêtir puisse être par définition opérée à froid (c'est-à-dire à une température voisine de la température ambiante = 23°C), les composés selon l'invention sont réticulés par des moyens appropriés, notamment par voie thermique et/ou par rayonnement électromagnétique (rayonnement d'électrons accélérés ou "électron beam"), et/ou les infrarouges.

Les compositions selon l'invention peuvent être utilisées notamment pour le revêtement ou l'enduction de supports fibreux tissés, tricotés ou non tissés, et, de préférence de supports tissés, tricotés ou non tissés en fibres synthétiques classiques ou techniques, avantageusement en polyester ou en polyamide et tissus de verre.

L'invention vise plus particulièrement le revêtement ou l'enduction d'au moins une des faces (intérieure et/ou extérieure) du matériau support souple (tissu en polyamide par exemple) utile pour la fabrication par couture de sacs gonflables pour la protection individuelle d'occupants de véhicules, en cas de choc.

Suivant une spécificité de l'invention, on utilise ces compositions pour réaliser une couche d'élastomère extensible et imperméable sur la face extérieure des sacs gonflables de sécurité, notamment en l'absence d'enduction intérieure lorsque le mode d'expansion du sac et/ou la composition de celui-ci le permettent.

La présente invention a aussi pour objet l'utilisation d'une composition ou de son système précurseur tels que décrits ci-dessus, pour le revêtement ou l'enduction de supports fibreux tels que décrits ci-dessus.

L'invention a aussi pour objet un tel support fibreux enduit conformément à l'invention et pouvant donc présenter les caractéristiques et propriétés indiquées plus haut.

L'invention vise en particulier le revêtement ou l'enduction d'au moins une des faces du matériau support souple (tissu en polyamide par exemple) utile pour la fabrication par couture de sacs gonflables pour la protection individuelle d'occupants de véhicules.

Il est bien entendu toutefois que l'invention n'y est pas limitée et peut être mise en oeuvre dans toute application recherchant des propriétés similaires

De manière générale, l'enduction dont il s'agit ici peut correspondre au dépôt d'une couche unique sur au moins une des faces du matériau support souple (enduction primaire). Mais on peut aussi l'utiliser en couche(s) complémentaire(s) sur ou sous d'autres types d'enduction. De même, on n'exclut pas l'application de plus d'une couche de la composition selon l'invention.

La présente invention va être maintenant décrite plus en détail à l'aide d'un mode de réalisation puis à titre d'exemple non limitatif.

**EXEMPLE :**

Dans cet exemple, la viscosité est mesurée à l'aide d'un viscosimètre BROOKFIELD selon les indications de la norme AFNOR NFT 76 106 de mai 82.

Dans un mélangeur à bras de 100 l on introduit 40kg d'une huile de silicone $\alpha,\omega$ divinylée de viscosité 1,5 Pa.s qui titre 0,1 meq de vinyle (Vi) par gramme d'huile, 0,24 kg d'eau potable et 0,24 kg d'hexaméthyldisilazane. Après homogénéisation on rajoute par portions en à peu près 2 heures 13,9 kg d'une silice de combustion caractérisée par sa surface spécifique de 200 $m^2/g$. Après environ 1 heure de mélangeage, on rajoute en à peu près 1 heure 2,27 kg d'hexaméthyldisilazane. 2 heures plus tard on commence une phase de chauffage au cours de laquelle le mélange est placé sous courant d'azote ($30m^3/h$) ; le chauffage continue jusqu'à atteindre environ 140°C, température palier qui est maintenue pendant 2 heures afin d'évacuer les matières volatiles de la composition. La suspension est alors laissée à refroidir.

Partant de cette suspension on formule une partie A et une partie B dans des réacteurs appropriés.

La partie A contient :

320 g de la suspension
111 g d'une huile $\alpha,\omega$ divinylée de viscosité 100 Pa.s qui titre 0,03 meq Vi par gramme d'huile
35 g de quartz broyé de granulométrie moyenne (d50) proche de 2,5 $\mu$m
12 g d'une huile polyhydrogéno de viscosité 0,3 Pa.s qui titre 1,6 meq SiH par gramme d'huile
12 g d'une huile $\alpha,\omega$ dihydrogéno qui titre 1,9 meq SiH par gramme d'huile
5g de triméthoxysilane de $\gamma$ méthacryloxypropyle
5 g de triméthoxysilane de $\gamma$ glycidoxypropyle
0,7 g d'éthynylcyclohexanol

La partie B contient :

480 g de la suspension -
20 g d'orthotitanate de butyle
1,1 g d'un catalyseur de Karstedt dosé à 10% de platine

Les parties A et B sont mélangées dans le rapport de 100 à 10 et, après débullage, on prépare les éprouvettes nécessaires à la mesure des propriétés mécaniques et des propriétés d'adhérence.

**Propriétés**

On contrôle la bonne résistance au vieillissement de la composition en vérifiant au moyen d'un viscosimètre à aiguille de type Brookfield que sa viscosité ne varie pas fortement après un séjour d'une semaine dans un récipient hermétique disposé dans un four maintenu à 70°C.

Pour caractériser la performance de l'élastomère on mesure :

- d'une part les propriétés dynamométriques d'une plaque échantillon de 2 mm d'épaisseur de l'élastomère moulé sous presse à 150°C et réticulé dans ces conditions en 1 heure. Les mesures correspondantes s'appuient sur les normes AFNOR T 46002 (allongement et résistance à la rupture), ASTM D 624A (Résistance à la déchirure) et DIN 53505 (dureté).
- d'autre part les propriétés d'adhérence de cet élastomère vis à vis d'un tissu de polyamide. On prépare pour ce faire une enduction de l'élastomère mince d'environ 50 μm sur un tissu de polyamide 6,6 caractérisé par son titre de 235 dtex ; le tissu est ensuite mis à réticuler en 2 minutes à 160°C. Après refroidissement des bandes de cet assemblage de 50 mm de large sont soumises à un test de froissement dit scrub-test" selon les normes NF G 37110 et ISO S 9812RN. On compte alors le nombre de froissements que peut subir l'enduction avant qu'elle ne soit détériorée (apparition de décohésions).

Viscosité en Pa.s avant / après le test de vieillissement 45 / 53 Pa.s

| | |
|---|---|
| Dureté Shore A | 24 |
| Allongement à la rupture | 610 % |
| Résistance à la rupture | 5,9 MPa |
| Résistance à la déchirure | 16 N/mm |
| Nombre de froissements sans endommagement | > 600 |

Comme en témoignent ces valeurs, la composition résiste bien au vieillissement, l'élastomère possède de bonnes propriétés dynamométriques et adhère fortement à son tissu support. En particulier, sa remarquable capacité d'extension et sa résistance à la déchirure lui confèrent une aptitude à supporter les déformations et contraintes subies par le tissu lors de son utilisation.

## Revendications

**1.** Procédé de préparation d'une composition d'enduction du type de celles vulcanisables à froid (EVF), ladite composition comprenant :

(1) au moins un polyorganosiloxane présentant, par molécule, au moins deux groupes alcényles, en $C_2$-$C_6$ liés au silicium,
(2) au moins un polyorganosiloxane présentant, par molécule, au moins deux atomes d'hydrogène liés au silicium,
(3) une quantité catalytiquement efficace d'au moins un catalyseur, composé d'au moins un métal appartenant au groupe du platine,
(4) un promoteur d'adhérence ternaire consistant en :

(4.1) au moins un organosilane alcoxylé contenant, par molécule, au moins un groupe alcényle en $C_3$ - $C_6$,
(4.2) au moins un composé organosilicié comprenant au moins un radical époxy,
(4.3) au moins un chélate de métal M et/ou un alcoxyde métallique de formule générale : M(OJ)n, avec n = valence de M et J = alkyle linéaire ou ramifié en $C_1$ - $C_8$,
M étant choisi dans le groupe formé par : Ti, Zr, Ge, Li, Mn, Fe, Al et Mg,

(5) une charge siliceuse renforçante traitée in situ par un agent de compatibilisation en présence de polyorganosiloxane (1),
(6) un polyorganosiloxane qualifié d'allongeur et présentant des motifs siloxyles terminaux à fonctions hydrogéno,
(7) éventuellement un neutralisant,
(8) éventuellement un inhibiteur de réticulation et/ou autre(s) additif(s) en usage dans ce type de compositions,
(9) et éventuellement des charges microsphériques creuses inorganiques expansées ou expansables.

ledit procédé étant **caractérisé en ce que**, pour obtenir la composition d'enduction visée, il est essentiel de réaliser la conjonction :

- de la préparation d'une suspension de charge siliceuse renforçante en mettant en présence cette charge siliceuse avec de l'agent de compatibilisation et du polyorganosiloxane (1), ledit agent de compatibilisation

étant introduit en deux temps dans un milieu de préparation contenant de la charge siliceuse renforçante et du polyorganosiloxane :

- d'une part, avant et/ou sensiblement simultanément à la mise en présence d'au moins une partie du polyorganosiloxane mise en oeuvre avec au moins une portion de la charge siliceuse utilisée, cette introduction d' agent de compatibilisation (portion 1) s'opérant en une ou plusieurs fois et correspondant à une proportion inférieure ou égale à 8 % en poids sec par rapport à la charge totale ;
- et d'autre part (portion 2), après cette mise en présence du polyorganosiloxane ;

- de l'emploi du polyorganosiloxane (6) allongeur de chaîne ; et
- de l'emploi d'un promoteur d'adhérence ternaire (4) incluant un organosiloxane ayant au moins un groupe alcényle en $C_3$-$C_6$.

**2.** Procédé selon la revendication 1, **caractérisé en ce que** ce traitement in situ consiste essentiellement :

- à mélanger :
  - 100 parties en poids du polyorganosiloxane
  - 0 à 5 parties en poids d'eau
  - 20 à 80 parties en poids de charge constituée par de la silice
  - 1 à 20 parties en poids d'agent de compatibilisation,
- à laisser réagir, de préférence sous agitation,
- à chauffer le mélange obtenu, en choisissant un couple pression/température tel qu'il se produit une dévolatilisation d'au moins une partie de l'eau et des éléments volatifs ;
- à refroidir si nécessaire le mélange.

**3.** Procédé selon la revendication 1 ou 2, **caractérisé en ce que** :

- on mélange, de préférence sous atmosphère de gaz inerte, tout ou partie du polyorganosiloxane, l'eau et tout ou partie de la charge siliceuse, avec une première portion d'agent de compatibiliation comprise entre 1 et 3 % en poids sec par rapport à la silice,
- on incorpore au mélange une deuxième portion d'agent de compatibilisation représentant entre 10 et 15 % en poids sec de la silice,
- éventuellement, on ajoute les restes d'huile silicone et de silice,
- on laisse réagir de préférence en poursuivant le mélange,
- on dévolatilise, de préférence sous atmosphère de gaz inerte,
- on laisse éventuellement refroidir le mélange dévolatilisé
- et on complète éventuellement la suspension avec les restes du polyorganosiloxane.

**4.** Procécé selon l'une quelconque des revendications 1 à 3, **caractérisé en ce que** l'agent de compatibilisaiton est choisi parmi les silazanes, notamment disilazanes et leurs mélanges.

**5.** Procédé selon l'une des revendications 1 à 4, **caractérisé en ce que** l'agent de compatibilisation de la portion 1 est choisi parmi le groupe consistant en :

- un silazane ou leurs mélanges,
- un siloxane hydroxylé di- ou mono-fonctionnel,
- une amine ou une alkylamine de bas poids moléculaire,
- un acide organique de bas poids moléculaire.

**6.** Composition d'enduction du type de celles vulcanisables à froid (EVF) susceptible d'être obtenu par la mise en oeuvre du procédé selon l'une quelconque des revendications 1 à 5 sur la base de :

(1) au moins un polyorganosiloxane présentant, par molécule, au moins deux groupes alcényles, en $C_2$-$C_6$ liés au silicium,
(2) au moins un polyorganosiloxane présentant, par molécule, au moins deux atomes d'hydrogène liés au silicium,

(3) une quantité catalytiquement efficace d'au moins un catalyseur, composé d'au moins un métal appartenant au groupe du platine,

(4) un promoteur d'adhérence ternaire consistant en :

(4.1) au moins un organosilane alcoxylé contenant, par molécule, au moins un groupe alcényle en $C_3$ - $C_6$,

(4.2) au moins un composé organosilicié comprenant au moins un radical époxy,

(4.3) au moins un chélate de métal M et/ou un alcoxyde métallique de formule générale : M(OJ)n, avec n = valence de M et J = alkyle linéaire ou ramifié en $C_1$ - $C_8$,

M étant choisi dans le groupe formé par : Ti, Zr, Ge, Li, Mn, Fe, Al et Mg,

(10) une charge siliceuse renforçante traitée in situ par un agent de compatibilisation en présence de polyorganosiloxane (1),

(11) un polyorganosiloxane qualifié d'allongeur et présentant des motifs siloxyles terminaux à fonctions hydrogéno,

(12) éventuellement un neutralisant,

(13) éventuellement un inhibiteur de réticulation et/ou autre(s) additif(s) en usage dans ce type de compositions,

(14) et éventuellement des charges microsphériques creuses inorganiques expansées ou expansables.

7. Composition selon la revendication 6 **caractérisée en ce que** l'organosiloxane alcoxylé (4.1) du promoteur (4) répond à la formule générale suivante :

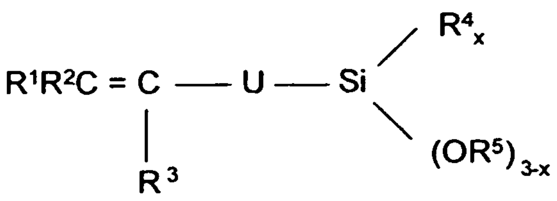

dans laquelle :

- $R^1$, $R^2$, $R^3$ sont des radicaux hydrogénés ou hydrocarbonés identiques ou différents entre eux et représentent l'hydrogène, un alkyle linéaire ou ramifié en $C_1$-$C_4$ ou un phényle éventuellement substitué par au moins un alkyle en $C_1$-$C_3$,
- U est un alkylène linéaire ou ramifié en $C_1$-$C_4$, ou un groupement divalent de formule -CO-O-alkylène où le reste alkylène est un alkylène linéaire ou ramifié en $C_1$-$C_4$ et la valence libre de droite (en gras) est reliée au Si,
- $R^4$ et $R^5$ sont des radicaux identiques ou différents et représentent un alkyle en $C_1$-$C_4$ linéaire ou ramifié,
- x=0 à 2.

8. Composition selon la revendication 6 ou 7, **caractérisée en ce que** le composé organosilicié (4.2) du promoteur (4) est choisi :

- soit parmi les produits (4.2a) répondant à la formule générale suivante :

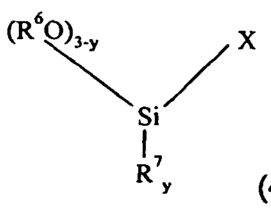

(4.2a)

dans laquelle:

• $R^5$ est un radical alkyle linéaire ou ramifié en $C_1$-$C_4$,

• $R^7$ est un radical alkyle linéaire ou ramifié,

• y est égal à 0, 1, 2 ou 3,

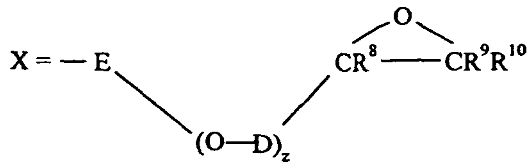

avec :

△ E et D qui sont des radicaux identiques ou différents choisis parmi les alkyles en $C_1$-$C_4$ linéaires ou ramifiés,
△ z qui est égal à 0 ou 1,
△ $R^8$, $R^9$, $R^{10}$ qui sont des radicaux identiques ou différents représentant l'hydrogène ou un alkyle linéaire ou ramifié en $C_1$-$C_4$,
△ $R^8$ et $R^9$ ou $R^{10}$ pouvant alternativement constituer ensemble et avec les deux carbones porteurs de l'époxy, un cycle alkyle ayant de 5 à 7 chaînons,

- soit parmi les produits (4.2b) constitués par des polydiorganosiloxanes époxyfonctionnels comportant :

(i) au moins un motif siloxyle de formule :

$$X_p G_q SiO_{\frac{4-(p+q)}{2}} \quad (IV.2\ b_1)$$

dans laquelle :

• X est le radical tel que défini ci-dessus pour la formule (IV.2 a)
• G est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
• p = 1 ou 2,
• q = 0, 1 ou 2,
• p+q=1,2 ou 3,

et (2i) éventuellement au moins un motif siloxyle de formule:

$$G_r SiO_{\frac{4-r}{2}} \quad (IV.2\ b_2)$$

dans laquelle G a la même signification que ci-dessus et r a une valeur comprise entre 0 et 3.

**9.** Composition selon l'une quelconque des revendications 6 à 8, **caractérisée en ce que** le métal M du chélate et/ou de l'alcoxyde (4.3) est choisi dans la liste suivante : Ti, Zr, Ge, Li, Mn.

**10.** Composition selon l'une quelconque des revendications 6 à 9, **caractérisée en ce que** le promoteur d'adhérence est présent à raison de 0,1 à 10 % en poids par rapport à l'ensemble des constituants.

**11.** Composition selon l'une quelconque des revendications 6 à 10, **caractérisée en ce que** le polyorganosiloxane (1) présente :

(i) des motifs siloxyles de formule :

$$T_a Z_b SiO_{\frac{4-(a+b)}{2}} \quad (I.1)$$

dans laquelle :

- T est un groupe alcényle,
- Z est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- a est 1 ou 2, b est 0, 1 ou 2 et a + b est compris entre 1 et 3,

et (2i) éventuellement des autres motifs siloxyles de formule :

$$Z_c SiO_{\frac{4-c}{2}} \quad (1.2)$$

dans laquelle Z a la même signification que ci-dessus et c a une valeur comprise entre 0 et 3.

**12.** Composition selon l'une quelconque des revendications 6 à 11, **caractérisée en ce que** le polyorganosiloxane (2) comporte

(i) des motifs siloxyles de formule:

$$H_d L_e SiO_{\frac{4-(d+e)}{2}} \quad (2.1)$$

dans laquelle :

- L est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- d est 1 ou 2, e est 0, 1 ou 2, d + e a une valeur comprise entre 1 et 3,

et (2i) éventuellement des autres motifs siloxyles de formule moyenne :

$$L_g SiO_{\frac{4-g}{2}} \quad (2.2)$$

dans laquelle L a la même signification que ci-dessus et g a une valeur comprise entre 0 et 3.

**13.** Composition selon l'une quelconque des revendications 6 à 12, **caractérisée en ce que** l'huile (1) a une viscosité comprise entre 200 et 10 000 mPa.s.

**14.** Composition selon l'une quelconque des revendications 6 à 13, **caractérisée en ce que** le polyorganosiloxane allongeur (6) présente des motifs siloxyles terminaux

$HR^0_2SiO_{1/2}$

avec

$R^0$ identiques ou différents entre eux et correspondant à un groupement alkyle linéaire ou ramifié en $C_1$-$C_6$ et/ou aryle substitué ou non.

**15.** Composition selon l'une quelconque des revendications 6 à 14, **caractérisée en ce que** le neutralisant (7) est une charge de silice, telle que du quartz broyé.

**16.** Composition selon l'une quelconque des revendications 1 à 15, **caractérisée en ce que** le promoteur d'adhérence (4) comprend l'un au moins des composés suivants :

(4.1) γ-méthacryloxypropyltriméthoxysilane,
(4.2) 3-glycidoxypropyltriméthoxysilane,
(4.3) titanate de butyle.

**17.** Système bicomposant précurseur de la composition selon l'une quelconque des revendications 6 à 16 **caractérisé :**

- **en ce qu'**il se présente en deux parties A et B distinctes destinées à être mélangées pour former la composition,
- et **en ce que** l'une de ces parties A et B comprend le catalyseur (3) et une seule espèce (1) ou (2) de polyorganosiloxane,
- **en ce que** la partie A ou B contenant le polyorganosiloxane (2) est exempte de composé (4.3) du promoteur (4) et la partie A ou B incluant le composé (4.1) du promoteur (4) ne comprend pas le catalyseur (3), et
- **en ce que** la charge traitée in situ est présente dans la ou les parties A et B qui contiennent le polyorganosiloxane (1).

**18.** Support fibreux tissé, tricoté, ou non tissé, enduit sur une ou deux faces par une composition selon l'une quelconque des revendications 6 à 16 ou par un système bi-composant selon la revendication 17.

**19.** Sac gonflable pour la protection d'un occupant de véhicule, formé à partir d'un tissu enduit selon la revendication 18.

## Claims

**1.** Process for preparing a coating composition of the type of those which are cold-curing (RTV), said composition comprising:

(1) at least one polyorganosiloxane having, per molecule, at least two $C_2$-$C_6$ alkenyl groups linked to the silicon;
(2) at least one polyorganosiloxane having, per molecule, at least two hydrogen atoms linked to the silicon;
(3) a catalytically effective amount of at least one catalyst, composed of at least one metal belonging to the platinum group;
(4) a ternary adhesion promoter comprising

(4.1) at least one alkoxylated organosilane containing, per molecule, at least one $C_3$-$C_6$ alkenyl group,
(4.2) at least one organosilicon compound which includes at least one epoxy radical, and
(4.3) at least one metal M chelate and/or one metal alkoxide of general formula: $M(OJ)_n$, with n = the valency of M and J = a linear or branched $C_1$-$C_8$ alkyl,
M being selected from the group formed by: Ti, Zr, Ge, Li, Mn, Fe, Al and Mg;

(5) a reinforcing siliceous filler treated *in situ* by a compatibilizer in the presence of polyorganosiloxane (1);
(6) a polyorganosiloxane termed an extender and having terminal siloxyl units with hydrogeno functional groups;
(7) optionally a neutralizer;
(8) optionally a crosslinking inhibitor and/or one or more other additives used in this type of composition;
(9) and optionally expanded or expandable inorganic hollow microspherical fillers,
said process being **characterized in that**, to obtain the intended coating composition, it is essential to combine:

- the preparation of a suspension of a reinforcing siliceous filler by bringing this siliceous filler into contact with the compatibilizer and the polyorganosiloxane (1), said compatibilizer being introduced in two stages into a preparation mixture containing reinforcing siliceous filler and polyorganosiloxane:

• on the one hand, before and/or more or less simultaneously with the contacting of at least some of

the polyorganosiloxane employed with at least one portion of the siliceous filler used, this introduction of compatibilizer (portion 1) taking place in one or more goes and corresponding to a proportion of less than or equal to 8% by dry weight with respect to the total filler; and
• on the other hand (portion 2), after this polyorganosiloxane contacting;

- the use of the chain extender polyorganosiloxane (6); and
- the use of a ternary adhesion promoter (4) that includes an organosiloxane having at least one $C_3$-$C_6$ alkenyl group.

**2.** Process according to Claim 1, **characterized in that** this *in situ* treatment essentially consists:

• in mixing:

- 100 parts by weight of polyorganosiloxane,
- 0 to 5 parts by weight of water,
- 20 to 80 parts by weight of filler consisting of silica and
- 1 to 20 parts by weight of compatibilizer;

• in making the above react, preferably with stirring;
• in heating the mixture obtained, choosing a pressure/temperature pair such that at least some of the water and of the volatile components are devolatilized; and
• if necessary, in cooling the mixture.

**3.** Process according to Claim 1 or 2, **characterized in that**:

- all or part of the polyorganosiloxane, the water and all or part of the siliceous filler are mixed, preferably in an atmosphere of inert gas, with a first portion of compatibilizer of between 1 and 3% by dry weight with respect to the silica;
- a second portion of compatibilizer, representing between 10 and 15% by dry weight of the silica, is incorporated into the mixture;
- optionally, the rest of the silicone oil and silica are added;
- the mixture is left to react, preferably while continuing the mixing;
- the mixture is devolatilized, preferably in an atmosphere of inert gas;
- optionally, the devolatilized mixture is left to cool; and
- optionally, the rest of the polyorganosiloxane is added to the suspension.

**4.** Process according to any one of Claims 1 to 3, **characterized in that** the compatibilizer is chosen from silazanes, especially disilazanes and mixtures thereof.

**5.** Process according to one of Claims 1 to 4, **characterized in that** the compatibilizer of portion 1 is chosen from the group consisting of:

- a silazane or their mixtures;
- a difunctional or monofunctional hydroxylated siloxane;
- an amine or an alkylamine of low molecular weight;
- an organic acid of low molecular weight.

**6.** Coating composition of the type of those which are cold-curing (RTV), that can be obtained by implementing the process according to any one of Claims 1 to 5 on the basis of:

(1) at least one polyorganosiloxane having, per molecule, at least two $C_2$-$C_6$ alkenyl groups linked to the silicon;
(2) at least one polyorganosiloxane having, per molecule, at least two hydrogen atoms linked to the silicon;
(3) a catalytically effective amount of at least one catalyst, composed of at least one metal belonging to the platinum group;
(4) a ternary adhesion promoter comprising

(4.1) at least one alkoxylated organosilane containing, per molecule, at least one $C_3$-$C_6$ alkenyl group,
(4.2) at least one organosilicon compound which includes at least one epoxy radical and

(4.3) at least one metal M chelate and/or one metal alkoxide of general formula: $M(OJ)_n$, with n = the valency of M and J = a linear or branched $C_1$-$C_8$ alkyl,
M being selected from the group formed by: Ti, Zr, Ge, Li, Mn, Fe, Al and Mg;

(10) a reinforcing siliceous filler treated *in situ* by a compatibilizer in the presence of polyorganosiloxane (1),
(11) a polyorganosiloxane termed an extender and having terminal siloxyl units with hydrogeno functional groups;
(12) optionally, a neutralizer;
(13) optionally, a crosslinking inhibiter and/or one or more other additives used in this type of composition; and
(14) optionally, expanded or expandable inorganic hollow microspherical fillers.

**7.** Composition according to Claim 6, **characterized in that** the alkoxylated organosiloxane (4.1) of the promoter (4) satisfies the following general formula:

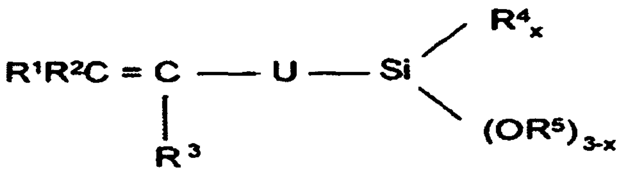

in which:

- $R^1$, $R^2$ and $R^3$ are hydrogen or hydrocarbon radicals, which are identical or different, and represent hydrogen, a linear or branched $C_1$-$C_4$ alkyl or a phenyl optionally substituted with at least one $C_1$-$C_3$ alkyl;
- U is a linear or branched $C_1$-$C_4$ alkylene or a divalent group of formula -CO-O-alkylene-, where the alkylene residue is a linear or branched $C_1$-$C_4$ alkylene and the free valency on the right (in bold) is linked to the Si;
- $R^4$ and $R^5$ are identical or different radicals and represent a linear or branched $C_1$-$C_4$ alkyl;
- x = 0 to 2.

**8.** Composition according to Claim 6 or 7, **characterized in that** the organosilicon compound (4.2) of the promoter (4) is chosen:

- either from the substances (4.2a) satisfying the following general formula:

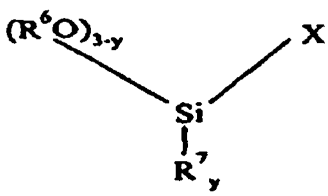

(4.2a)

in which:

• $R^6$ is a linear or branched $C_1$-$C_4$ alkyl radical,
• $R^7$ is a linear or branched alkyl radical,
• y is equal to 0, 1, 2 or 3,

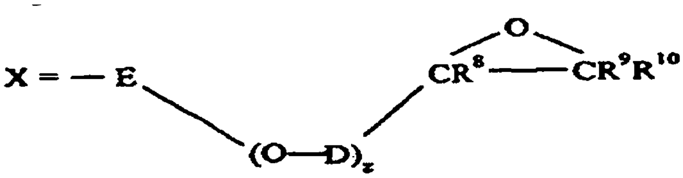

with

△ E and D, which are identical or different radicals, selected from linear or branched $C_1$-$C_4$ alkyls,
△ z, which is equal to 0 or 1,
△ $R^8$, $R^9$, $R^{10}$, which are identical or different radicals, representing hydrogen or a linear or branched $C_1$-$C_4$ alkyl,
△ $R^8$ and $R^9$ or $R^{10}$, which may alternately constitute together, and with the two carbons containing the epoxy, a 5-membered to 7-membered alkyl ring,

- or from the substances (4.2b) consisting of epoxy-functional polydiorganosiloxanes comprising:

(i) at least one siloxyl unit of formula:

$$X_p G_q SiO_{\frac{4-(p+q)}{2}} \quad (IV.2\ b_1)$$

in which:

• X is the radical as defined above in the case of formula (IV.2a),
• G is a monovalent hydrocarbon group, free of any action unfavourable to the activity of the catalyst and selected from alkyl groups having from 1 to 8 carbon atoms inclusive, optionally substituted by at least one halogen atom, and also from aryl groups,
• p = 1 or 2,
• q = 0, 1 or 2,
• p+q = 1, 2 or 3,

and (ii) optionally at least one siloxyl unit of formula:

$$G_r SiO_{\frac{4-r}{2}} \quad (IV.2\ b_2)$$

in which G has the same meaning as above and r has a value of between 0 and 3.

**9.** Composition according to any one of Claims 6 to 8, **characterized in that** the metal M of the chelate and/or of the alkoxide (4.3) is chosen from the following list: Ti, Zr, Ge, Li, Mn.

**10.** Composition according to any one of Claims 6 to 9, **characterized in that** the adhesion promoter is present in an amount of from 0.1 to 10% by weight with respect to all of the constituents.

**11.** Composition according to any one of Claims 6 to 10, **characterized in that** the polyorganosiloxane (1) has:

(i) siloxyl units of formula:

$$T_a Z_b SiO_{\frac{4-(a+b)}{2}} \quad (I.1)$$

in which:

- T is an alkenyl group,

- Z is a monovalent hydrocarbon group, free of any action unfavourable to the activity of the catalyst and selected from alkyl groups having from 1 to 8 carbon atoms inclusive, optionally substituted with at least one halogen atom, and also from aryl groups;
- a is 1 or 2, b is 0, 1 or 2 and a+b is between 1 and 3; and

(ii) optionally other siloxyl units of formula:

$$Z_c\,SiO_{\frac{4-c}{2}} \quad (1.2)$$

in which z has the same meaning as above and c has a value of between 0 and 3.

**12.** Composition according to any one of Claims 6 to 11, **characterized in that** the polyorganosiloxane (2) comprises:

(i) siloxyl units of formula:

$$H_d\,L_e\,SiO_{\frac{4-(d+e)}{2}} \quad (2.1)$$

in which:

- L is a monovalent hydrocarbon group, free of any action unfavourable to the activity of the catalyst and selected from alkyl groups having from 1 to 8 carbon atoms inclusive, optionally substituted with at least one halogen atom, and also from aryl groups;
- d is 1 or 2, e is 0, 1 or 2, d+e has a value of between 1 and 3; and

(ii) optionally other siloxyl units of average formula:

$$L_g\,SiO_{\frac{4-g}{2}} \quad (2.2)$$

in which L has the same meaning as above and g has a value of between 0 and 3.

**13.** Composition according to any one of Claims 6 to 12, **characterized in that** the oil (1) has a viscosity of between 200 and 10 000 mPa.s.

**14.** Composition according to any one of Claims 6 to 13, **characterized in that** the polyorganosiloxane extender (6) has terminal siloxyl units

$$HR^0_2SiO_{1/2}$$

with $R^0$, which are identical or different and correspond to a substituted or unsubstituted aryl and/or linear or branched $C_1$-$C_6$ alkyl group.

**15.** Composition according to any one of Claims 6 to 14, **characterized in that** the neutralizer (7) is a silica filler, such as ground quartz.

**16.** Composition according to any one of Claims 1 to 15, **characterized in that** the adhesion promoter (4) comprises at least one of the following compounds:

(4.1) γ-methacryloxypropyltrimethoxysilane;
(4.2) 3-glycidoxypropyltrimethoxysilane;
(4.3) butyl titanate.

**17.** Two-component precursor system for the composition according to any one of Claims 6 to 16, **characterized:**

- **in that** it is in the form of two separate parts A and B which are intended to be mixed in order to form the composition;
- **in that** one of these parts A and B contains the catalyst (3) and only one species (1) or (2) of polyorganosiloxane;
- **in that** the part A or B containing the polyorganosiloxane (2) does not contain compound (4.3) of the promoter (4) and the part A or B including the compound (4.1) of the promoter (4) does not contain the catalyst (3); and
- **in that** the filler treated *in situ* is present in either or both parts A and B which contain the Polyorganosiloxane (1).

**18.** Woven, knitted or non-woven fibrous substrate coated on one or two sides with a composition according to any one of Claims 6 to 16 or with a two-component system according to Claim 17.

**19.** Airbag for protecting an occupant of a vehicle, formed from a fabric coated according to Claim 18.

## Patentansprüche

**1.** Verfahren zur Herstellung einer Beschichtungszusammensetzung von dem Typ, der in der Kälte vulkanisierbar ist (EVF), wobei die genannte Zusammensetzung umfasst:

(1) mindestens ein Polyorganosiloxan, das pro Molekül mindestens zwei Gruppen Alkenyl mit 2 bis 6 Kohlenstoffatomen aufweist, gebunden an das Silicium,
(2) mindestens ein Polyorganosiloxan, das pro Molekül mindestens zwei Wasserstoffatome aufweist, gebunden an das Silicium,
(3) eine katalytisch wirksame Menge von mindestens einem Katalysator, einer Verbindung von mindestens einem Metall, das aus der Platingruppe stammt,
(4) einen ternären Haftungspromotor, bestehend aus:

(4.1) mindestens einem alkoxylierten Organosilan, das pro Molekül mindestens eine Gruppe Alkenyl mit 3 bis 6 Kohlenstoffatomen enthält,
(4.2) mindestens einer Organosilicium-Verbindung, die mindestens einen Rest Epoxy umfasst,
(4.3) mindestens einem Chelat des Metalls M und/oder einem metallischen Alkoxyd der allgemeinen Formel: $M(OJ)_n$ mit
n = Valenz von M und J = lineares oder verzweigtes Alkyl mit 1 bis 8 Kohlenstoffatomen,
wobei M aus der Gruppe gewählt wird, die gebildet wird durch: Ti, Zr, Ge, Li, Mn, Fe, Al und Mg,

(5) einen verstärkenden siliciumhaltigen Füllstoff, behandelt in situ durch ein Kompatibilisierungsmittel in Anwesenheit von Polyorganosiloxan (1),
(6) ein Polyorganosiloxan, befähigt als Kettenverlängerer und aufweisend terminale Struktureinheiten Siloxyl mit Wasserstoffunktionen,
(7) gegebenenfalls ein Neutralisierungsmittel,
(8) gegebenenfalls einen Inhibitor der Vernetzung und/oder einen oder mehrere andere Zusatzstoff(e), die bei dieser Art von Zusammensetzungen gebräuchlich sind, und
(9) gegebenenfalls anorganische, hohle mikrosphärische, geschäumte oder schäumbare Füllstoffe, wobei das genannte Verfahren **dadurch gekennzeichnet ist, dass** es für das Erhalten der angestrebten Beschichtungszusammensetzung wesentlich ist, die nachstehenden Operationen durchzuführen:

- Herstellung einer Suspension von verstärkendem siliciumhaltigen Füllstoff, indem man diesen siliciumhaltigen Füllstoff mit einem Kompatibilisierungsmittel und dem Polyorganosiloxan (1) zusammenbringt, wobei das genannte Kompatibilisierungsmittel zu zwei Zeitpunkten in ein Herstellungsmedium eingetragen wird, das den verstärkenden siliciumhaltigen Füllstoff und das Polyorganosiloxan enthält:

• einerseits vor und/oder etwa gleichzeitig mit dem Zusammenbringen von mindestens einem Teil des eingesetzten Polyorganosiloxans mit mindestens einem Teil des verwendeten siliciumhaltigen Füllstoffes, wobei dieses Eintragen des Kompatibilisierungsmittels (Portion 1) einmal oder mehrmals erfolgt und einem Teil von unter oder gleich 8 Gew.-% trocken entspricht, bezogen auf den gesamten Füllstoff;
• und andererseits (Portion 2) nach diesem Zusammenbringen des Polyorganosiloxans;

- Verwendung des Polyorganosiloxans (6) als Kettenverlängerer; und
- Verwendung eines ternären Haftungspromotors (4), der ein Organosiloxan mit mindestens einer Gruppe Alkenyl mit 3 bis 6 Kohlenstoffatomen einschließt.

**2.** Verfahren nach Anspruch 1, **dadurch gekennzeichnet, dass** diese Behandlung in situ im wesentlichen besteht aus:

• zu vermischen:

- 100 Gewichtsteile Polyorganosiloxan
- 0 bis 5 Gewichtsteile Wasser
- 20 bis 80 Gewichtsteile Füllstoff, bestehend aus Siliciumdioxid
- 1 bis 20 Gewichtsteile Kompatibilisierungsmittel

• reagieren lassen, vorzugsweise unter Rühren,
• Erwärmen der erhaltenen Mischung, indem man ein solches Paar Druck/Temperatur wählt, dass eine Verflüchtigung von mindestens einem Teil des Wassers und der flüchtigen Elemente erfolgt;
• Abkühlung der Mischung, wenn erforderlich.

**3.** Verfahren nach Anspruch 1 oder 2, **dadurch gekennzeichnet, dass**

- man, vorzugsweise unter Atmosphäre von Inertgas, ganz oder teilweise das Polyorganosiloxan, das Wasser und ganz oder teilweise den siliciumhaltigen Füllstoff mit einer ersten Portion von Kompatibilisierungsmittel zwischen einschließlich 1 und 3 Gew.-%, bezogen auf das Siliciumdioxid, vermischt,
- man in die Mischung eine zweite Portion von Kompatibilisierungsmittel einbringt, die zwischen 10 und 15 Gew.-% trocken des Siliciumdioxides ausmacht,
- man gegebenenfalls die Reste von Siliconöl und Siliciumdioxid zusetzt,
- man reagieren lässt, vorzugsweise unter Fortsetzung des Mischens,
- man die flüchtigen Produkte entfernt, vorzugsweise unter Atmosphäre von Inertgas,
- man gegebenenfalls die von den flüchtigen Produkten befreite Mischung abkühlen lässt, und
- man gegebenenfalls die Suspension mit den Resten des Polyorganosiloxans vervollständigt.

**4.** Verfahren nach irgendeinem der Ansprüche 1 bis 3, **dadurch gekennzeichnet, dass** das Kompatibilisierungsmittel unter den Silazanen, insbesondere den Disilazanen und ihren Mischungen ausgewählt wird.

**5.** Verfahren nach einem der Ansprüche 1 bis 4, **dadurch gekennzeichnet, dass** das Kompatibilisierungsmittel der Portion 1 aus der Gruppe gewählt wird, die besteht aus:

- einem Silazan oder seinen Mischungen,
- einem hydroxylierten, di- oder monofunktionellen Siloxan,
- einem Amin oder einem Alkylamin mit niedrigem Molekulargewicht,
- einer organischen Säure mit niedrigem Molekulargewicht.

**6.** Beschichtungszusammensetzung von dem Typ, der in der Kälte vulkanisierbar (EVF) und geeignet ist, mittels der Durchführung des Verfahrens nach irgendeinem der Ansprüche 1 bis 5 erhalten zu werden, auf der Basis von:

(1) mindestens einem Polyorganosiloxan, das pro Molekül mindestens zwei Gruppen Alkenyl mit 2 bis 6 Kohlenstoffatomen aufweist, gebunden an das Silicium,
(2) mindestens einem Polyorganosiloxan, das pro Molekül mindestens zwei Wasserstoffatome aufweist, gebunden an das Silicium,
(3) einer katalytisch wirksamen Menge von mindestens einem Katalysator, einer Verbindung von mindestens einem Metall, das aus der Platingruppe stammt,
(4) einem ternären Haftungspromotor, bestehend aus:

(4.1) mindestens einem alkoxylierten Organosilan, das pro Molekül mindestens eine Gruppe Alkenyl mit 3

bis 6 Kohlenstoffatomen enthält,
(4.2) mindestens einer Organosilicium-Verbindung, die mindestens einen Rest Epoxy umfasst,
(4.3) mindestens einem Chelat des Metalls M und/oder einem metallischen Alkoxyd der allgemeinen Formel: $M(OJ)_n$ mit
n = Valenz von M und J = lineares oder verzweigtes Alkyl mit 1 bis 8 Kohlenstoffatomen,
wobei M aus der Gruppe gewählt wird, die gebildet wird durch: Ti, Zr, Ge, Li, Mn, Fe, Al und Mg,

(10) einen verstärkenden siliciumhaltigen Füllstoff, behandelt in situ durch ein Kompatibilisierungsmittel in Anwesenheit von Polyorganosiloxan (1),
(11) ein Polyorganosiloxan, befähigt als Kettenverlängerer und aufweisend terminale Struktureinheiten Siloxyl mit Wasserstoffunktionen,
(12) gegebenenfalls ein Neutralisierungsmittel,
(13) gegebenenfalls einen Inhibitor der Vernetzung und/oder einen oder mehrere andere Zusatzstoff(e), die bei dieser Art von Zusammensetzungen gebräuchlich sind, und
(14) gegebenenfalls anorganische, hohle mikrosphärische, geschäumte oder schäumbare Füllstoffe.

7. Zusammensetzung nach Anspruch 6, **dadurch gekennzeichnet, dass** das alkoxylierte Organosilan (4.1) des Promotors (4) der folgenden allgemeinen Formel entspricht:

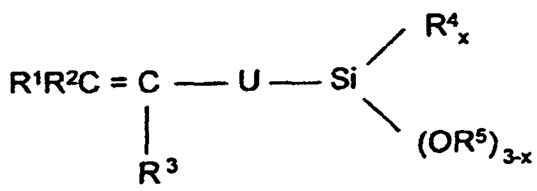

in der

- $R^1$, $R^2$, $R^3$ Wasserstoff-Reste oder Kohlenwasserstoff-Reste sind, untereinander gleich oder verschieden und darstellend Wasserstoff, einen linearen oder verzweigten Rest Alkyl mit 1 bis 4 Kohlenstoffatomen oder ein Phenyl, gegebenenfalls substituiert durch mindestens ein Alkyl mit 1 bis 3 Kohlenstoffatomen,
- U ein lineares oder verzweigtes Alkylen mit 1 bis 4 Kohlenstoffatomen oder eine divalente Gruppe der Formel -CO-O-alkylen darstellt, worin der Rest Alkylen ein lineares oder verzweigtes Alkylen mit 1 bis 4 Kohlenstoffatomen ist und die freie Valenz von rechts (in fett) mit dem Si verbunden ist,
- $R^4$ und $R^5$ gleiche oder verschiedene Reste sind und ein lineares oder verzweigtes Alkylen mit 1 bis 4 Kohlenstoffatomen darstellen,
- x = 0 bis 2 ist.

8. Zusammensetzung nach Anspruch 6 oder 7, **dadurch gekennzeichnet, dass** die Organosilicium-Verbindung (4.2) des Promotors (4) ausgewählt wird:

- entweder unter den Produkten (4.2a), die der folgenden allgemeinen Formel entsprechen:

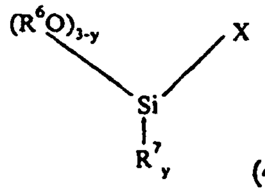

**(4.2a)**

in der

• $R^6$ ein linearer oder verzweigter Rest Alkyl mit 1 bis 4 Kohlenstoffatomen ist,
• $R^7$ ein linearer oder verzweigter Rest Alkyl ist

• y gleich 0, 1, 2 oder 3 ist,

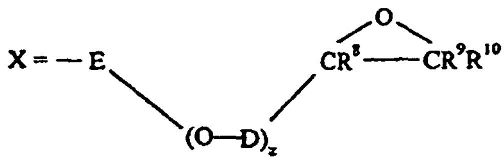

mit

Δ E und D sind gleiche oder verschiedene Reste, ausgewählt unter den linearen oder verzweigten Alkylgruppen mit 1 bis 4 Kohlenstoffatomen,
Δ z, das gleich 0 oder 1 ist,
Δ $R^8$, $R^9$, $R^{10}$, die gleiche oder verschiedene Reste sind und Wasserstoff oder ein lineares oder verzweigtes Alkyl mit 1 bis 4 Kohlenstoffatomen darstellen,
Δ $R^8$ und $R^9$ oder $R^{10}$ können alternativ zusammen und mit den zwei Kohlenstoffen, die das Epoxy tragen, einen Cycloalkylring mit 5 bis 7 Kettengliedern bilden,

- oder unter den Produkten (4.2b), gebildet durch epoxyfunktionelle Polydiorganosiloxane, umfassend:

(i) mindestens eine Struktureinheit Siloxyl der Formel

$$X_p G_q SiO_{\frac{4-(p+q)}{2}} \quad (IV.2\ b_1)$$

in der

• X der wie oben bei der Formel (IV.2a) definierte Rest ist,
• G eine monovalente Kohlenwasserstoff-Gruppe darstellt, die frei ist von einer ungünstigen Wirkung auf die Aktivität des Katalysators und ausgewählt wird unter den Gruppen Alkyl mit einschließlich 1 bis 8 Kohlenstoffatomen, gegebenenfalls substituiert durch mindestens ein Halogenatom, sowie unter den Gruppen Aryl,
• p = 1 oder 2 ist,
• q = 0, 1 oder 2 ist,
• p + q = 1, 2 oder 3 sind; und

(2i) gegebenenfalls mindestens eine Struktureinheit Siloxyl der Formel

$$G_r SiO_{\frac{4-r}{2}} \quad (IV.2\ b_2)$$

in der
G die gleiche Bedeutung hat wie oben und r einen Wert zwischen einschließlich 0 und 3 besitzt.

**9.** Zusammensetzung nach irgendeinem der Ansprüche 6 bis 9, **dadurch gekennzeichnet, dass** das Metall M des Chelats und/oder des Alkoxyds (4.3) aus der folgenden Liste gewählt wird: Ti, Zr, Ge, Li, Mn.

**10.** Zusammensetzung nach irgendeinem der Ansprüche 6 bis 9, **dadurch gekennzeichnet, dass** der Haftungspromotor in einem Verhältnis von 0,1 bis 10 Gew.-% anwesend ist, bezogen auf die Gesamtheit der Bestandteile.

**11.** Zusammensetzung nach irgendeinem der Ansprüche 6 bis 10, **dadurch gekennzeichnet, dass** das Polyorganosiloxan (1) aufweist:

(i) Struktureinheiten Siloxyl der Formel:

$$T_a Z_b SiO_{\frac{4-(a+b)}{2}} \quad (I.1)$$

in der

- T eine Gruppe Alkenyl ist,
- Z eine monovalente Kohlenwasserstoff-Gruppe darstellt, die frei ist von einer ungünstigen Wirkung auf die Aktivität des Katalysators und ausgewählt wird unter den Gruppen Alkyl mit einschließlich 1 bis 8 Kohlenstoffatomen, gegebenenfalls substituiert durch mindestens ein Halogenatom, sowie unter den Gruppen Aryl,
- a gleich 1 oder 2 ist, b gleich 0, 1 oder 2 ist, und a + b zwischen einschließlich 1 und 3 betragen; und

(2i) gegebenenfalls anderen Struktureinheiten Siloxyl der Formel

$$Z_c SiO_{\frac{4-c}{2}} \quad (I.2)$$

in der
Z die gleiche Bedeutung hat wie oben und c einen Wert zwischen einschließlich 0 und 3 besitzt.

**12.** Zusammensetzung nach irgendeinem der Ansprüche 6 bis 11, **dadurch gekennzeichnet, dass** das Polyorganosiloxan (2) umfasst:

(i) Struktureinheiten Siloxyl der Formel:

$$H_d L_e SiO_{\frac{4-(d+e)}{2}} \quad (2.1)$$

in der

- L eine monovalente Kohlenwasserstoff Gruppe darstellt, die frei ist von einer ungünstigen Wirkung auf die Aktivität des Katalysators und ausgewählt wird unter den Gruppen Alkyl mit einschließlich 1 bis 8 Kohlenstoffatomen, gegebenenfalls substituiert durch mindestens ein Halogenatom, sowie unter den Gruppen Aryl,
- d gleich 1 oder 2 ist, e gleich 0, 1 oder 2 ist, und d + e einen Wert zwischen einschließlich 1 und 3 besitzen; und

(2i) gegebenenfalls anderen Struktureinheiten Siloxyl der durchschnittlichen Formel

$$L_g SiO_{\frac{4-g}{2}} \quad (2.2)$$

in der
L die gleiche Bedeutung hat wie oben und g einen Wert zwischen einschließlich 0 und 3 besitzt.

**13.** Zusammensetzung nach irgendeinem der Ansprüche 6 bis 12, **dadurch gekennzeichnet, dass** das Öl (1) eine Viskosität zwischen einschließlich 200 und 10000 mPa.s besitzt.

**14.** Zusammensetzung nach irgendeinem der Ansprüche 6 bis 13, **dadurch gekennzeichnet, dass** das Polyorganosiloxan (6) als Kettenverlängerer terminale Struktureinheiten Siloxyl

$$HR^0_2SiO_{1/2}$$

aufweist, mit
$R^0$, untereinander gleich oder verschieden und entsprechend einer linearen oder verzweigten Gruppe Alkyl mit 1 bis 6 Kohlenstoffatomen und/oder Aryl, substituiert oder nicht.

**15.** Zusammensetzung nach irgendeinem der Ansprüche 6 bis 14, **dadurch gekennzeichnet, dass** das Neutralisierungsmittel (7) ein Füllstoff aus Siliciumdioxid ist, wie zerkleinerter Quarz.

**16.** Zusammensetzung nach irgendeinem der Ansprüche 1 bis 15, **dadurch gekennzeichnet, dass** der Haftungspromotor (4) mindestens eine der folgenden Verbindungen umfasst:

(4.1) γ-Methacryloxypropyl-trimethoxysilan,
(4.2) 3-Glycidoxypropyl-trimethoxysilan,
(4.3) Butyltitanat.

**17.** Zweikomponenten-System als Vorläufer der Zusammensetzung nach irgendeinem der Ansprüche 6 bis 16, **dadurch gekennzeichnet, dass**

- es in zwei verschiedenen Teilen A und B vorliegt, die dazu vorgesehen sind, vermischt zu werden, um die Zusammensetzung zu bilden, und
- **dadurch**, dass einer von diesen Teilen A und B den Katalysator (3) und eine einzige Art (1) oder (2) des Polyorganosiloxans umfasst,
- **dadurch**, dass der Teil A oder B, der das Polyorganosiloxan (2) enthält, frei ist von der Verbindung (4.3) des Promotors (4) und der Teil A oder B, der die Verbindung (4.1) des Promotors (4) einschließt, keinen Katalysator (3) umfasst, und
- **dadurch**, dass der in situ behandelte Füllstoff in dem oder den Teilen A und B anwesend ist, der das Polyorganosiloxan (1) enthält.

**18.** Faserförmiger Träger, gewebt, gestrickt oder nicht gewebt, beschichtet auf einer oder zwei Flächen durch eine Zusammensetzung nach irgendeinem der Ansprüche 6 bis 16 oder durch ein Zweikomponenten-System nach Anspruch 17.

**19.** Aufblasbarer Sack für den Schutz eines Fahrzeug-Insassen, gebildet ausgehend von einem beschichteten Gewebe nach Anspruch 18.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2668106 A
- EP 0553840 A
- US 5296298 A
- EP 681014 A
- FR 2320324 A
- EP 462032 A
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- FR 1528464 B
- FR 2372874 A
- US 3615972 A
- EP 486080 A